(19) Europäisches Patentamt
European Patent Office
Office européen des brevets

(11) **EP 2 990 846 A1**

(12) **EUROPEAN PATENT APPLICATION**
published in accordance with Art. 153(4) EPC

(43) Date of publication:
**02.03.2016 Bulletin 2016/09**

(51) Int Cl.:
***G02B 6/44*** $^{(2006.01)}$

(21) Application number: **14788961.2**

(86) International application number:
**PCT/JP2014/061199**

(22) Date of filing: **21.04.2014**

(87) International publication number:
**WO 2014/175229 (30.10.2014 Gazette 2014/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.04.2013 JP 2013092581**

(71) Applicant: **Sumitomo Electric Industries, Ltd. Osaka-shi, Osaka 541-0041 (JP)**

(72) Inventors:
• **NOGUCHI Akiyoshi**
 **Yokohama-shi, Kanagawa 244-8588 (JP)**

• **OKADA Keisuke**
 **Yokohama-shi, Kanagawa 244-8588 (JP)**
• **FUJITA Taro**
 **Osaka-shi, Osaka 554-0024 (JP)**
• **NISHIKAWA Shinya**
 **Osaka-shi, Osaka 554-0024 (JP)**

(74) Representative: **Hoffmann Eitle Patent- und Rechtsanwälte PartmbB Arabellastraße 30 81925 München (DE)**

(54) **OPTICAL FIBER CABLE**

(57) One object of the present invention is to provide an optical fiber cable capable (1) of achieving both of flame retardance and low frictional properties. The optical fiber cable (1) includes an optical fiber (2) and a jacket (4) that coats the optical fiber (2). The jacket (4) is configured such that the surface thereof is provided with a plurality of convex portions (6) which are formed of an inorganic substance having a compressive hardness of 9.8 to 600 MPa. It is preferable that particles of silica, carbon, or the like having a diameter of 2 nm to 3 $\mu$m are used as the inorganic substance.

*FIG. 1*

**Description**

**Technical Field**

The present invention relates to an optical fiber cable, for example, to be wired for leading an optical fiber from the outdoors into a house.

**Background Art**

At the time of passing a new optical fiber cable through a laid cable piping, there is a case where the passage of the new optical fiber cable becomes difficult due to friction between optical fiber cables. Therefore, as a jacket for the optical fiber cable, it is desirable to use a material having low frictional properties. On the other hand, as the jacket for the optical fiber cable, a flame retardant resin has been used for satisfying the requirement of flame retardance. However, since the flame retardant resin is generally composed of a soft material having a high friction coefficient, it is difficult to realize the low frictional properties.

Accordingly, the following Patent Document 1 discloses an optical fiber cable which uses as a jacket an olefin-based resin mixture in which talc having a crystal diameter of 3 to 10 $\mu$m is added to an olefin-based resin.

Background Art Document

Patent Document

Patent Document 1: JP-A-2007-272199

**Summary of the Invention**

Problems that the Invention is to Solve

However, in the optical fiber cable disclosed in Patent Document 1, there is a case where the added talc is crushed by external pressure. In this case, contact area between the jacket of the cable and the cable piping or the like increases and thus frictional force becomes high.

An object of the present invention is to provide an optical fiber cable capable of achieving both of flame retardance and low frictional properties.

Means for Solving the Problems

In order to achieve the above object, the optical fiber cable of the invention comprises:

an optical fiber and
a jacket that coats the optical fiber,
wherein the surface of the jacket is provided with a plurality of convex portions which are formed of an inorganic substance having a compressive hardness of 9.8 to 600 MPa.

Advantage of the Invention

According to the invention, an optical fiber cable capable of achieving both of flame retardance and low frictional properties can be provided.

Brief Description of the Drawings

Fig. 1 is a perspective view showing one example of the optical fiber cable according to an embodiment of the invention.
Fig. 2 is a cross-sectional view of the optical fiber cable shown in Fig. 1 at the E-E line.
Fig. 3 is a schematic diagram showing a method for measuring a friction coefficient in an optical fiber cable.
Fig. 4 is a diagram viewing Fig. 3 from a side surface side.

Modes for Carrying Out the Invention

<Summary of Embodiments of the Invention>

First, a summary of embodiments of the present invention will be described.

(1) The optical fiber cable is an optical fiber cable which comprises:

an optical fiber and
a jacket that coats the optical fiber,
wherein the surface of the jacket is provided with a plurality of convex portions which are formed of an inorganic substance having a compressive hardness of 9.8 to 600 MPa.

According to the optical fiber cable, since the surface of the jacket is provided with convex portions having high hardness, the convex portions are not crushed and can maintain the shape even when press pressure is applied to the optical fiber cable from an outer peripheral side. Therefore, the optical fiber cable can maintain a state of point contact with the other member at the convex portions. Thereby, even in the case where a flame retardant resin is used as a material of the jacket, the friction coefficient between the optical fiber cable and the other member can be reduced and flame retardance and low frictional properties can be both achieved.
(2) Moreover, in the optical fiber cable of the above (1), the convex portions are preferably formed of particles having a diameter of 2 nm to 3 μm.
According to the optical fiber cable, the diameter of the convex portions having particle shapes is from 2 nm to 3 μm. Therefore, each of the convex portions and the other member comes into point contact with each other in a smaller contact area. Thereby, the friction coefficient between the optical fiber cable and the other member can be further reduced.
(3) Further, in the optical fiber cable of the above (1) or (2), the convex portions are preferably present irregularly on the surface of the jacket.
According to the optical fiber cable, since the convex portions are present irregularly on the surface of the jacket, it is possible to suppress an increase in the friction coefficient resulting from engagement of the convex portions of the optical fiber cables that come into contact with each other.
(4) Moreover, in the optical fiber cable of any one of the above (1) to (3), the jacket is preferably formed of a member having a Shore D hardness of 45 to 60.
According to the optical fiber cable, since the jacket has a Shore D hardness of 45 to 60, the convex portions become difficult to sink into the jacket even when pressing force is applied to the optical fiber cable from an outer peripheral side thereof. Thereby, the optical fiber cable can maintain the state of the point contact between the convex portions and the other member.
(5) Furthermore, in the optical fiber cable of any of the above (1) to (4), the jacket is preferably formed of a member having a Shore D hardness of 45 to 50.

According to the optical fiber cable, a highly flame-retardant resin having a Shore D hardness of 45 to 50 can be used as a material of the jacket and thus high flame retardance and low smoke-emitting properties can be obtained.

<Detail of Embodiments of the Invention>

The following will describe one example of the embodiments of the optical fiber cable according to the invention with reference to Drawings.

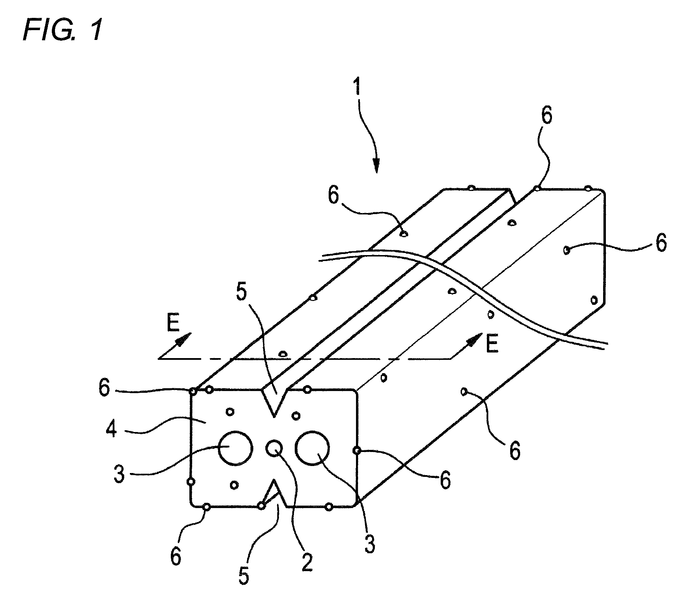

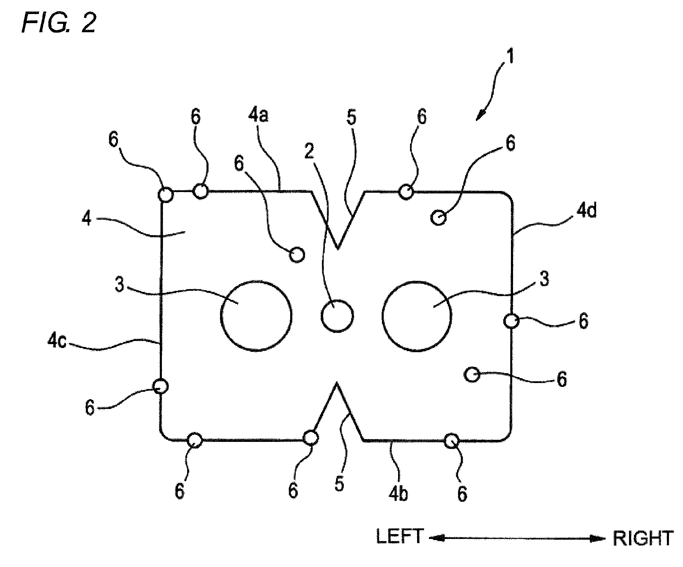

Fig. 1 shows a perspective view of an indoor cable 1 (one example of the optical fiber cable) according to an embodiment of the invention. Fig. 2 shows a cross-sectional view at the E-E line in Fig. 1.
As shown in Figs. 1 and 2, the indoor cable 1 comprises an optical fiber 2, a pair of tension wires 3, and a jacket 4 that coats them. The indoor cable 1 is a flat-type cable having a rectangular cross-section.
The optical fiber 2 is disposed at almost center of the indoor cable 1 and has a configuration that the outer periphery of a double-structured glass body formed from a core and a clad is coated with a UV curable resin.
The two tension wires 3 are disposed on both sides of the optical fiber 2 in parallel in a cross-section longitudinal direction (in a right and left direction in Fig. 2) along the optical fiber 2. As the tension wire 3, for example, a steel wire, an aramid fiber, a glass-reinforced plastic, or the like is used.
The jacket 4 is provided on the outer peripheries of the optical fiber 2 and two tension wires 3 in close contact with almost no gaps. A particulate member is mixed into the jacket 4 and the particulate member is scattered irregularly as convex portions 6 on the surface of the outer periphery of the jacket 4.

A pair of notches 5 are formed at the central part of the cross-section longitudinal surfaces (upper and lower surfaces in Fig. 2) 4a, 4b of the jacket 4 across the optical fiber 2. A pair of the notches 5 are each cut in toward the optical fiber 2 in a V shape. As for the size of the jacket 4, length of the cross-section longitudinal surfaces 4a, 4b is typically from 2.0 to 3.5 mm and length of the cross-section short surfaces 4c, 4d is typically from 1.5 to 2.0 mm.

Moreover, as a material of the jacket 4, there is used a resin using a low density polyethylene as a base resin to which silicone or a flame retardant resin is blended. For example, as the material of the jacket 4, there is used a jacket material such as flame retardant polyethylene in which a flame retardant material such as magnesium hydroxide is added to a base resin. Besides, as the jacket material, flame retardant polyolefin, polypropylene, polyvinyl chloride, or the like can be also used. Thus, when the jacket 4 contains a flame retardant material, the jacket 4 satisfies flame retardant tests such as a JIS combustion test (JIS C 300 5 4. 26), a vertical combustion test (UL1581 1080. VW-1 Flame Test), a multiple cable laying vertical combustion test defined in IEC60332-3-24, and the like. Also, the jacket 4 satisfies a low smoke-emitting test defined in IEC61034.

Shore D hardness of the jacket 4 is preferably set to from 45 to 60. Furthermore, as the Shore D hardness of the jacket 4 for securing high flame retardance and low smoke-emitting properties, it is preferably set to from 45 to 50. The measurement of compression hardness of the silica particles and the carbon particles can be, for example, performed using an MCT-series micro compression testing machine manufactured by Shimadzu Corporation.

Moreover, to the jacket 4, an inorganic substance such as silica or carbon for forming the convex portions is blended. In the case where silica is blended into a resin material, for example, silica having an average particle diameter of 2 nm to 3 $\mu$m, preferably 2 nm to 50 nm, a Mohs hardness of 7, and a compressive hardness of 9.8 to 196.1 MPa is preferably blended. In the case where carbon is blended into a resin material, for example, silica having an average particle diameter of 50 nm to 150 nm, a Mohs hardness of 7, and a compressive hardness of 135 to 600 MPa is preferably blended. Thus, as the inorganic substance to be blended into the jacket 4, one having an average particle diameter of 2 nm to 3 $\mu$m and a compressive hardness of 9.8 to 600 MPa is preferred.

The ratio of the blending material to be blended into the jacket 4 is desirably 0.3 to 2.0% by mass of the inorganic substance to the jacket material. Furthermore, the ratio is more desirably from 0.3 to 1.0% by mass, from 0.6 to 1.0% by mass. Moreover, a rate of silicone is desirably about 1% by mass.

The optical fiber 2 and the two tension wires 3 are collectively coated with the jacket 4 by extrusion molding of the jacket 4 through a die whose illustration in the figure is omitted. Also, the surface of the jacket 4 is provided with a plurality of the convex portions 6 so that they are scattered irregularly. Thus, the indoor cable 1 is integrally configured and manufactured by coating the optical fiber 2 and the two tension wires 3 with the jacket 4.

According to the indoor cable 1 of the present embodiment described above, a plurality of the convex portions 6 can be irregularly scattered on the surface of the jacket 4 by blending an inorganic substance composed of silica, carbon, or the like and extruding the blended mixture. Since the convex portions 6 have a compressive hardness of 9.8 to 196.1 MPa in the case of silica and 135 to 600 MPa in the case of carbon, the portions can maintain the shape without being crushed even when pressing force is applied to the indoor cable 1 from the outer peripheral side.

At the time of passing the indoor cable 1 through a piping or the like, the cable comes into contact with the other members (inner peripheral surface of the piping, the other cables, and the like) and friction occurs. However, according to the indoor cable 1 of the present embodiment, the convex portions 6 provided on the jacket 4 have a particle shape and its diameter is from 2 nm to 3 $\mu$m. Therefore, the indoor cable 1 is in a state of point contact with a small contact area with the other member at the convex portions 6 of the jacket 4. Therefore, the indoor cable 1 can reduce the friction coefficient with the other members.

Thereby, the indoor cable 1 can improve workability of passage, such as a work of inserting a new indoor cable 1 into a cable piping in which a plurality of indoor cables 1 have been stored or a work of pulling out any indoor cable 1 from a plurality of indoor cables 1.

Also, since the convex portions 6 of the indoor cable 1 are provided so as to be present irregularly on the surface of the jacket 4, it is possible to inhibit the convex portions of the indoor cables 1 from engaging each other in the cable piping. Thereby, it is possible to suppress an increase in the friction coefficient between the indoor cables 1.

Moreover, since the jacket 4 is formed of a member having a Shore D hardness of 45 to 60, it is possible to prevent the convex portions 6 from sinking into the jacket 4 even when the other member abuts to an outer periphery of the indoor cable 1 and thus pressing force is applied to the convex portions 6 on the jacket 4.

Incidentally, in the case where the surface of the jacket 4 is not provided with the convex portions 6, the Shore D hardness of the jacket 4 should be controlled to from 50 to 60 for realizing low frictional properties in the indoor cable. On the other hand, in order to obtain high flame retardance, for example, magnesium hydroxide is blended but, when magnesium hydroxide is blended, the jacket 4 becomes soft, so that the friction coefficient increases and it becomes difficult to realize the low frictional properties. Accordingly, in the indoor cable 1, the low frictional properties can be realized by providing the convex portions 6 formed of an inorganic substance having a compressive hardness of 9.8 to 600 MPa even when a highly flame-retardant jacket material having a Shore D hardness of 45 to 50 is used.

[Examples]

For the indoor cable 1 described in the above, a friction coefficient was measured. Specifically, there are prepared five cables each for individual indoor cables A to D of four conditions where the blending amount of silica that is an inorganic substance for forming the convex portions 6 is different. As for the indoor cables A to D, first, there are produced a master batch in which 10% by mass of silica is blended into low density polyethylene as a base material and master pellets in which 50% by mass of silicone is blended into low density polyethylene. Moreover, flame retardant polyethylene in which magnesium hydroxide is blended into low density polyethylene is produced as a jacket material. On this occasion, the Shore D hardness of the jacket material is set to be 47. Then, the indoor cables A to D having different blending amounts of silica are produced by blending 2 parts of the master pellets and predetermined parts of the master batch into 100 g of the jacket material. In the indoor cable A, no master batch is blended and hence the blending amount of silica is 0% by mass. Moreover, in the indoor cable B, 3 parts of the master batch is blended and thus the blending amount of silica is about 0.3% by mass. Further, in the indoor cable C, 6 parts of the master batch is blended and thus the blending amount of silica is about 0.6% by mass. Furthermore, in the indoor cable D, 10 parts of the master batch is blended and thus the blending amount of silica is about 1.0% by mass. The size of the indoor cable 1 to be used in the present Example is, for example, 2.0 mm (cross-section longitudinal length) x 1.5 mm (cross-section short length) as the cross-section shape.

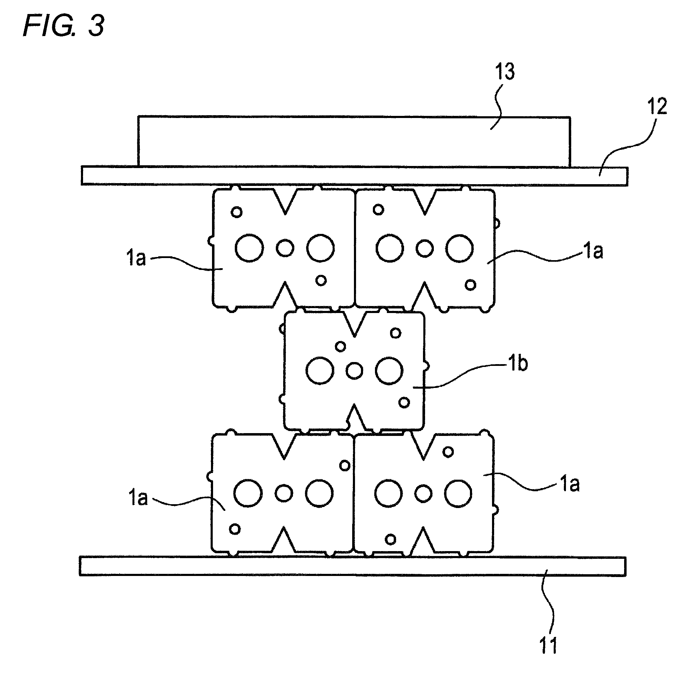

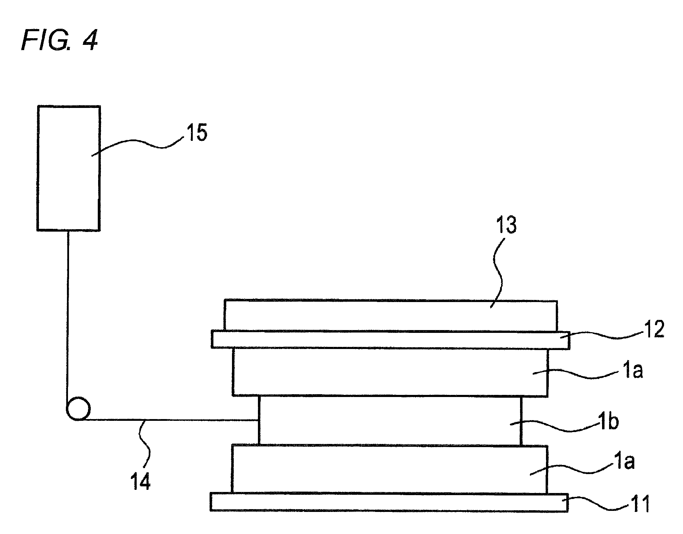

As shown in Fig. 3, among five indoor cables 1, two indoor cables 1a for fixing are arranged in parallel, one indoor cable (indoor cable to be measured) 1b for moving is disposed on the paralleled indoor cables 1a for fixing, and two indoor cables 1a for fixing are disposed in parallel on the indoor cable 1b for moving. The indoor cables 1a for fixing are each fixed to a lower plate 11 for fixing or an upper plate 12 for fixing. A weight 13 of about 2 kg is placed on an upper part of thus disposed indoor cables 1a, 1b and the indoor cable 1b for moving disposed between the indoor cables 1a for fixing is connected to a pull-out device 15 through a wire 14 as shown in Fig. 4. Then, the indoor cable 1b is drawn by the pull-out device 15 and a friction coefficient μ was determined from a relationship between the force F necessary for initiation of moving the indoor cable 1b for moving and the weight W of the weight 13 based on the following equation 1.

$$\mu = F/W \ ... \ (\text{Equation 1})$$

Incidentally, the friction coefficient μ of the indoor cables B to D according to the present Examples is a value obtained when the friction coefficient of the indoor cable A which is not blended with silica is taken as 100.

[Table 1]

| Indoor cable | Blending amount of master batch part(s) | Blending amount of silica % by mass | Friction coefficient μ |
|---|---|---|---|
| A | 0 | 0 | 100 |
| B | 3 | 0.3 | 72 |
| C | 6 | 0.6 | 44 |
| D | 10 | 1.0 | 34 |

As shown in Table 1, in any cases of the indoor cables B to D, the friction coefficient μ was decreased as compared with the indoor cable A which was not blended with silica. From this result, it can be confirmed that the coefficient of friction μ is decreased by blending silica into the jacket material. Moreover, it can be confirmed that the friction coefficient μ decreases as the blending amount of silica increases. The blending amount of silica is preferably in the range of 0.3 to 1.0% by mass, in the range of 0.3 to 0.6% by mass, or the range of 0.6 to 1.0% by mass is desirable. Incidentally, from the above results, it is presumed that the reduction of the friction coefficient μ may be small even when the blending amount of silica is increased to 1.0% by mass or more but, for reducing the frictional force, the blending amount of silica may be increased to 1.0% by mass or more, as needed. Furthermore, the above results are obtained for silica but it is believed that similar results are also obtained for carbon.

The present invention is not limited to the embodiments described above and may be freely subjected to suitable modifications, improvements, and the like. Furthermore, the materials, shapes, sizes, numerical values, forms, numbers, disposed locations, and the like of the individual components in the above-described embodiments are arbitrary as long as they can achieve the present invention and are not limited.

For example, although the indoor cable 1 is exemplified as an optical fiber cable, it is not limited thereto and a drop cable is also applicable. It is also possible to apply an indoor cable or a drop cable which stores an optical tape in which a plurality of optical fibers are integrated.

While the invention has been described in detail and with reference to specific embodiments thereof, it will be apparent to one skilled in the art that various changes and modifications can be made therein without departing from the spirit and scope thereof.

The present application is based on Japanese Patent Application No. 2013-092581 filed on April 25, 2013, and the contents are incorporated herein by reference.

Description of Reference Numerals and Signs

1: Indoor cable (one example of optical fiber cable)
2: Optical fiber
3: Tension wire (one example of tension body)
4: Jacket
5: Notch
6: Convex portion
13: Weight
14: Wire
15: Pull-out device

## Claims

1. An optical fiber cable comprising:

   an optical fiber and
   a jacket that coats the optical fiber,
   wherein the surface of the jacket is provided with a plurality of convex portions which are formed of an inorganic substance having a compressive hardness of 9.8 to 600 MPa.

2. The optical fiber cable according to claim 1, wherein the convex portions are formed of particles having a diameter of 2 nm to 3 $\mu$m.

3. The optical fiber cable according to claim 1 or 2, wherein the convex portions are present irregularly on the surface of the jacket.

4. The optical fiber cable according to any one of claims 1 to 3, wherein the jacket is formed of a member having a Shore D hardness of 45 to 60.

5. The optical fiber cable according to any one of claims 1 to 4, wherein the jacket is formed of a member having a Shore D hardness of 45 to 50.

FIG. 1

FIG. 2

LEFT ◄──────────► RIGHT

FIG. 3

*FIG. 4*

## INTERNATIONAL SEARCH REPORT

| International application No. |
| --- |
| PCT/JP2014/061199 |

| A. CLASSIFICATION OF SUBJECT MATTER |
| --- |
| G02B6/44(2006.01)i |

According to International Patent Classification (IPC) or to both national classification and IPC

| B. FIELDS SEARCHED |
| --- |
| Minimum documentation searched (classification system followed by classification symbols) |
| G02B6/44 |

| Documentation searched other than minimum documentation to the extent that such documents are included in the fields searched |
| --- |
| Jitsuyo Shinan Koho 1922–1996 Jitsuyo Shinan Toroku Koho 1996–2014 |
| Kokai Jitsuyo Shinan Koho 1971–2014 Toroku Jitsuyo Shinan Koho 1994–2014 |

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| Y | JP 2010-44254 A (Nippon Telegraph and Telephone Corp.), 25 February 2010 (25.02.2010), claims 1, 5; paragraphs [0029], [0034]; fig. 1 (Family: none) | 1-5 |
| Y | JP 7-102186 A (Kansai Paint Co., Ltd.), 18 April 1995 (18.04.1995), paragraphs [0036], [0037] (Family: none) | 1-5 |

☒ Further documents are listed in the continuation of Box C. ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 07 July, 2014 (07.07.14) | 29 July, 2014 (29.07.14) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2014/061199

C (Continuation).   DOCUMENTS CONSIDERED TO BE RELEVANT

| Category* | Citation of document, with indication, where appropriate, of the relevant passages | Relevant to claim No. |
|---|---|---|
| Y | Microfilm of the specification and drawings annexed to the request of Japanese Utility Model Application No. 1286/1987(Laid-open No. 109910/1988) (Sumitomo Electric Industries, Ltd.), 15 July 1988 (15.07.1988), claims 1, 4 (Family: none) | 1-5 |
| Y | JP 2-50111 A  (Sumitomo Electric Industries, Ltd.), 20 February 1990 (20.02.1990), claims 1, 2; page 2, lower right column, lines 12 to 19 & US 4952021 A             & AU 3488189 A | 1-5 |
| Y | JP 2011-33783 A  (Sumitomo Electric Industries, Ltd.), 17 February 2011 (17.02.2011), table 1 (Family: none) | 4,5 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007272199 A

- JP 2013092581 A